(19) Europäisches Patentamt
European Patent Office
Office européen des brevets

(11) **EP 3 264 247 B1**

(12) **EUROPÄISCHE PATENTSCHRIFT**

(45) Veröffentlichungstag und Bekanntmachung des Hinweises auf die Patenterteilung:
**31.03.2021   Patentblatt 2021/13**

(51) Int Cl.:
*G06F 3/0482* (2013.01)     *G06F 3/0481* (2013.01)
*B60K 35/00* (2006.01)      *B60K 37/06* (2006.01)

(21) Anmeldenummer: **17174917.9**

(22) Anmeldetag: **08.06.2017**

(54) **TECHNIK ZUR BEDIENUNG EINES KRAFTFAHRZEUGS**

TECHNIQUE FOR OPERATING A MOTOR VEHICLE

TECHNIQUE D'UTILISATION D'UN VÉHICULE AUTOMOBILE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **30.06.2016   DE 102016007998**

(43) Veröffentlichungstag der Anmeldung:
**03.01.2018   Patentblatt 2018/01**

(73) Patentinhaber: **MAN Truck & Bus SE**
**80995 München (DE)**

(72) Erfinder:
• **Mohra, Holger**
  **80805 München (DE)**
• **Arnold, Claus**
  **93161 Sinzing (DE)**
• **Zademach, Martin**
  **85055 Ingolstadt (DE)**
• **Güllich, Johannes**
  **85229 Markt Indersdorf (DE)**
• **Ochs, Thomas**
  **82178 Puchheim (DE)**

(74) Vertreter: **v. Bezold & Partner Patentanwälte - PartG mbB**
**Akademiestraße 7**
**80799 München (DE)**

(56) Entgegenhaltungen:
EP-A2- 1 710 673        DE-A1-102007 039 442
US-A1- 2007 083 911     US-A1- 2008 022 228
US-A1- 2010 333 030     US-A1- 2016 154 564

**Beschreibung**

Die vorliegende Erfindung betrifft eine Technik zur Bedienung eines Kraftfahrzeugs. Insbesondere sind eine Bedienvorrichtung und ein mit der Bedienvorrichtung ausgestattetes Kraftfahrzeug beschrieben.

Zur Bedienung der wachsenden Funktionalität und Konnektivität eines Kraftfahrzeugs sind im Stand der Technik Benutzerschnittstellen mit hierarchischen Menüstrukturen bekannt, die beispielsweise an einem Fahrerarbeitsplatz angeordnet sind. Hierzu zählen auch sogenannte Infotainment-Systeme. Jedoch weisen herkömmliche Benutzerschnittstellen unübersichtliche Menüstrukturen bei wachsendem Inhalt auf.

Werden unterschiedliche Hierarchieebenen in derselben Darstellungsumgebung angezeigt, beispielsweise immer in Listenform oder immer in einer kreisförmigen Anordnung, kann ein Benutzer dem Anzeigezustand nicht entnehmen, zu welcher Hierarchieebene die angezeigten Menüpunkte gehören. Vielmehr muss der Benutzer vor der Auswahl eines Menüpunkts gegebenenfalls mehrere Hierarchieebenen vor und zurück gehen, um sich innerhalb der Menüstruktur zu orientieren. Auch der Weg durch die Menüstruktur ist schwer nachvollziehbar und nicht zuverlässig reproduzierbar.

Weitere herkömmliche Benutzerschnittstellen differenzieren Hierarchieeben anhand der Darstellungsumgebung. Dies führt jedoch beim Übergang zwischen Hierarchieebenen zu einem Medienbruch, d. h. einer Inkonsistenz zwischen Anzeige und Eingabe. So werden beispielsweise Hauptmenüpunkte in der kreisförmigen Anordnung dargestellt, und die Unterpunkte zu einem der Hauptmenüpunkte werden in linearer Listenform dargestellt. Um mit denselben Bedienelementen der Benutzerschnittstelle in verschiedenen Hierarchieebenen Einstellungen vorzunehmen, muss der Benutzer dasselbe Bedienelement mit unterschiedlichen Steuerfunktionen abhängig von der Hierarchieebene assoziieren. Animationen in der Bedienungsführung, die solche Medienbrüche zu kaschieren versuchen, wirken nicht richtungsweisend und leitend für den Bedienungsablauf, sondern als Grafikeffekt.

Das Dokument US 2010/0333030 A1 beschreibt in bestimmten Ausführungsformen eine grafische Darstellung eines zweidimensionalen Radialmenüs in einer grafischen Benutzeroberfläche. Die grafische Darstellung des zweidimensionalen Radialmenüs wird in eine grafische Darstellung eines dreidimensionalen Radialmenüs in der grafischen Benutzeroberfläche umgewandelt. In bestimmten Ausführungsformen verwendet die Darstellung Daten, welche ein dreidimensionales Radialmenümodell repräsentieren, um die grafische Darstellung des zweidimensionalen Radialmenüs auf der Grundlage einer ersten Perspektive in der grafischen Benutzeroberfläche darzustellen, und das Umwandeln verwendet die Daten, um die grafische Darstellung des dreidimensionalen Radialmenüs auf der Grundlage einer zweiten Perspektive in der grafischen Benutzeroberfläche darzustellen.

Das Dokument EP 1 710 673 A2 beschreibt ein Verfahren zum Anzeigen eines Menüs mit mehreren Menüpunkten. Ein Orbitalmenü wird angezeigt durch Anordnen der mehreren Menüelemente auf einem geschlossenen Orbital. Ein Signal zum Umschalten des Orbitalmenüs wird erfasst. Ein an einer vorbestimmten Position auf dem Orbital angeordnetes Menüelement und mindestens ein um das an der vorbestimmten Position angeordnete Menüelement angeordnetes Menüelement werden extrahiert. Ein extrahiertes Menü wird angezeigt, indem die extrahierten Menüelemente angeordnet werden unter Beibehaltung der Korrelation zwischen den Menüelementen auf dem Orbitalmenü.

Das Dokument DE 10 2007 039 442 A1 beschreibt ein Verfahren zum Anzeigen von Informationen in einem Kraftfahrzeug, bei dem mehrere Objekte mittels eines in einem Kraftfahrzeug befestigten Displays grafisch dargestellt werden. Eine Benutzerschnittstelleneinrichtung erzeugt Grafikdaten, die das Display so ansteuern, dass die grafischen Objekte auf einem virtuellen, perspektivisch dargestellten Ring angeordnet sind. Auf eine Eingabe werden die Grafikdaten so verändert, dass sich die grafischen Objekte auf dem virtuellen Ring karussellartig drehen.

Das Dokument US 2016/0154564 A1 beschreibt eine Benutzeroberfläche, in der eine sphärische Arbeitsfläche dargestellt ist. Die sphärische Arbeitsfläche umfasst eine Reihe von Schnittstellenbereichen. Klassensymbole für Anwendungsprogramme werden in einem ersten Schnittstellenbereich angezeigt. Ein gegenwärtig ausgewähltes Klassensymbol wird in einem zweiten Schnittstellenbereichen angezeigt. Anwendungssymbole, welche dem aktuell ausgewählten Klassensymbol zugeordnet sind, werden in einem dritten Schnittstellenbereich angezeigt.

Das Dokument US 2008/0022228 A1 beschreibt eine Benutzeroberfläche, in der eine erste Menüebene auf einem ersten Ring mit einem oder mehreren (symbolischen) Menüs dargestellt ist, und in der eine zweite Menüebene auf einem zweiten Ring (symbolische) Untermenüs zu einem der Menüs der ersten Menüebene darstellen kann. Auch eine weitere Untermenüebene auf einem dritten Ring ist darstellbar. Der zweite und jeder weitere Ring liegt dabei perspektivisch außen um den ersten bzw. vorhergehenden Ring mit einer gemeinsamen Mittelachse, wobei die jeweils vorhergehenden Ringe beim Erscheinen eines weiteren äußeren Rings perspektivisch schrumpfen.

Somit ist es eine Aufgabe der vorliegenden Erfindung, eine Fahrzeugbedienung bereitzustellen, bei der unterschiedliche Hierarchieebenen direkt erkennbar sind, ohne den Benutzer mit unterschiedlichen Bedienungsführungen auf den unterschiedlichen Hierarchieebenen zu konfrontieren.

Diese Aufgabe wird durch eine Bedienvorrichtung und ein mit der Bedienvorrichtung ausgestattetes Kraftfahrzeug mit den Merkmalen der unabhängigen Ansprüche gelöst. Vorteilhafte Ausführungen und Anwendungen sind Gegenstand der abhängigen Ansprüche und werden im Folgenden unter teilweiser Bezugnahme auf die Figuren näher erläutert.

Gemäß einem Aspekt ist eine Vorrichtung zur Bedienung eines Kraftfahrzeugs bereitgestellt. Die Vorrichtung umfasst einen Bildschirm zur Anzeige einer Projektion eines Kreiszylinders mit einer Stirnfläche und einer Mantelfläche. In einem ersten Zustand weicht eine Längsachse des Kreiszylinders um weniger als 45° von einer Richtung der Projektion ab. In einem zweiten Zustand weicht die Längsachse des Kreiszylinders um mehr als 45° von der Richtung der Projektion ab. Die Vorrichtung umfasst ferner eine Eingabeeinheit zur Eingabe einer Drehrichtung und einer Auswahlbestätigung. Die Eingabe der Drehrichtung bewirkt eine stetige Drehbewegung des Kreiszylinders um seine Längsachse. Die Eingabe der Auswahlbestätigung im ersten Zustand bewirkt eine stetige Drehbewegung des Kreiszylinders um eine zur Projektionsrichtung senkrechte Achse in den zweiten Zustand. Im ersten Zustand ist eine Vielzahl an Auswahlpunkten auf der Stirnfläche angeordnet. Im zweiten Zustand ist eine Vielzahl an Unterauswahlpunkten auf der Mantelfläche angeordnet.

Indem die Projektion desselben Kreiszylinders die Anordnung der Auswahlpunkte im ersten Zustand als auch die Anordnung der Unterauswahlpunkte im zweiten Zustand definiert, kann eine einheitliche Drehrichtungseingabe die Drehbewegung des Kreiszylinders und damit die Auswahl sowohl im ersten Zustand als auch im zweiten Zustand steuern. Damit kann sowohl bei der Eingabe als auch der Bildschirmanzeige ein Medienbruch vermieden werden. Durch die Persistenz des Kreiszylinders bei Änderung des Zustands kann eine für alle Zustände einheitliche Wirkung mit der Drehrichtungseingabe in der Eingabeeinheit assoziiert sein.

Durch die Projektion und die jeweilige Winkelstellung der Längsachse des Kreiszylinders kann im ersten Zustand eine Darstellung der Unterauswahlpunkte und/oder im zweiten Zustand eine Darstellung der Auswahlpunkte vermieden oder unterdrückt werden. Dadurch kann das Anzeigen irrelevanter Angaben zur effektiveren Nutzung eines begrenzten Sichtfelds auf den Bildschirm und/oder eine Ablenkung des Benutzers (insbesondere während der Fahrt) vermieden werden. Im ersten Zustand können die Unterauswahlpunkte ausgeblendet oder unkenntlich sein. Alternativ oder ergänzend können im zweiten Zustand die Auswahlpunkte ausgeblendet oder unkenntlich sein.

Alternativ oder ergänzend kann durch die Projektion und die jeweilige Winkelstellung der Längsachse des Kreiszylinders im ersten Zustand eine Darstellung der Auswahlpunkte und im zweiten Zustand eine Darstellung der Unterauswahlpunkte hervorgehoben oder vergrößert werden. Dadurch kann die Anzeige relevanter Angaben zur effektiveren Nutzung des begrenzten Sichtfelds auf den Bildschirm erreicht werden und/oder eine Ablenkung des Benutzers vermieden werden.

Das Unterdrücken und/oder das Hervorheben der Auswahlpunkte und/oder der Unterauswahlpunkte kann eine stetige Funktion der Drehbewegung des Kreiszylinders um die zur Projektionsrichtung senkrechte Achse sein.

Die Projektion kann eine Zentralprojektion oder eine Parallelprojektion, insbesondere eine senkrechte Parallelprojektion, sein.

Die Vorrichtung kann ferner eine mit dem Bildschirm und der Eingabeeinheit verbundene Steuerung umfassen, die dazu ausgebildet ist, die Projektion des Kreiszylinders in Abhängigkeit von den Eingaben zu berechnen und an den Bildschirm auszugeben. Alternativ oder ergänzend kann die Steuerung dazu ausgebildet sein, jeden hierin beschriebenen Schritt oder jede hierin beschriebene Funktion auszuführen.

Eine Drehstellung des Kreiszylinders um die Längsachse im ersten Zustand bestimmt einen der Auswahlpunkte und eine Drehstellung des Kreiszylinders um die Längsachse im zweiten Zustand bestimmt einen der Unterauswahlpunkte.

Die Auswahlpunkte können im ersten Zustand umlaufend auf der Stirnfläche angeordnet sein. Alternativ oder ergänzend können die Unterauswahlpunkte im zweiten Zustand umlaufend auf der Mantelfläche angeordnet sein. Beispielsweise kann die Kombination von Zustand und Drehstellung einen Auswahlpunkt oder einen Unterauswahlpunkt eindeutig bestimmen. Der bestimmte Auswahlpunkt und/oder der bestimmte Unterauswahlpunkt kann der tiefste Auswahlpunkt beziehungsweise der tiefste Unterauswahlpunkt auf dem Bildschirm (oder der in der räumlichen Entsprechung vorderste Punkt) sein. Der bestimmte Auswahlpunkt und/oder der bestimmte Unterauswahlpunkt kann optional durch Farbe oder Helligkeit hervorgehoben sein.

Die im zweiten Zustand auf der Mantelfläche angeordneten Unterauswahlpunkte können vom bei der Eingabe der Auswahlbestätigung durch die Drehstellung im ersten Zustand bestimmten Auswahlpunkt abhängig sein.

Die Eingabeeinheit kann dazu ausgebildet sein, im zweiten Zustand, in Reaktion auf die Eingabe einer Rücksprunganweisung und/oder in Reaktion auf ein Funktionsende des bestimmten Unterauswahlpunkts, eine stetige Drehbewegung des Kreiszylinders um die zur Projektionsrichtung senkrechte Achse in den ersten Zustand zu bewirken.

Die Drehbewegung des Kreiszylinders um die zur Projektionsrichtung senkrechte Achse ermöglicht im zweiten Zustand eine Stauchung der Anzeige auf dem Bildschirm. Durch die Stauchung können rare Anzeigeflächen des Bildschirms verfügbar werden, beispielsweise zum Anzeigen von Fahrzeugdaten (z. B. Fahrzeugfunktionen oder Fahrzeugeinstellungen). Die angezeigten Fahrzeugdaten können abhängig vom durch die Auswahlbestätigung gewählten Auswahlpunkt und/oder durch die Drehstellung bestimmten Unterauswahlpunkt abhängen.

Die zur Projektionsrichtung senkrechte Achse kann gegenüber einer Mitte (beispielsweise einem geometrischen Zentrum oder Schwerpunkt) des Kreiszylinders versetzt sein. Beispielsweise kann die zur Projektionsrichtung senkrechte Achse entgegen der Projektionsrichtung versetzt und/oder parallel zum Bildschirm in Richtung eines Rands des Bildschirms versetzt sein.

Im ersten Zustand wird die Mitte des Kreiszylinders in eine Mitte des Bildschirms projiziert und im zweiten Zustand wird die Mitte des Kreiszylinders in die obere Hälfte des Bildschirms projiziert.

Die Vorrichtung ist weiterhin dazu ausgebildet, in einem durch die Drehbewegung vom ersten Zustand in den zweiten Zustand freigegebenen Bereich des Bildschirms Daten anzuzeigen. Die im freigegebenen Bereich angezeigten Daten können vom durch die gegenwärtige Drehstellung des Kreiszylinders bestimmten Unterauswahlpunkt abhängen und/oder mit dem bestimmten Unterauswahlpunkt assoziiert sein.

Die Eingabeeinheit kann einen Drehknopf umfassen. Die Eingabeeinheit kann dazu ausgebildet sein, eine Drehstellung und/oder eine Drehbewegung des Drehknopfs zu erfassen. Die Drehstellung und/oder die Drehbewegung des Drehknopfs können der Drehstellung beziehungsweise der Drehbewegung des Kreiszylinders um seine Längsachse entsprechen. Alternativ oder ergänzend kann die Eingabe der Auswahlbestätigung ein Drücken des Drehknopfs längs seiner Drehachse umfassen.

Alternativ oder ergänzend kann die Eingabeeinheit dazu ausgebildet sein, Gesten (beispielsweise Handbewegungen und/oder Fingerbewegungen) im Raum oder auf einer berührungsempfindlichen Oberfläche (beispielsweise des Bildschirms) zu erfassen.

Die Gesten können im Raum erfasst werden durch Aussenden von Mikrowellenstrahlung und Empfangen eines Echosignals der Mikrowellenstrahlung. Eine Schwenkbewegung des Handgelenks (als Eingabe der Drehrichtung) kann die Drehbewegung des Kreiszylinders um die Längsachse von einem Auswahlpunkt oder Unterauswahlpunkt zum umlaufend nächsten Auswahlpunkt beziehungsweise Unterauswahlpunkt bewirken. Eine Annäherung oder Absenkbewegung einer Hand oder eines Fingers (als Eingabe der Auswahlbestätigung) kann den Übergang vom ersten Zustand zum zweiten Zustand bewirken. Ein Entfernen oder Anheben der Hand oder des Fingers (als Eingabe der Rücksprunganweisung) kann den Übergang vom zweiten Zustand zum ersten Zustand bewirken.

Die Gesten können auf der berührungsempfindlichen Oberfläche kapazitiv erfasst werden. Der Bildschirm kann ein berührungsempfindlicher Bildschirm sein.

Die Vorrichtung (beispielsweise der Bildschirm und/oder die Eingabeeinheit) kann an einem Armaturenbrett, an einem Kombinationsinstrument oder an einer Mittelkonsole des Kraftfahrzeugs angeordnet sein. Der Bildschirm der Vorrichtung kann ein Primärdisplay des Kombinationsinstruments oder ein Sekundärdisplay des Kraftfahrzeugs sein.

Eine Höhe des Kreiszylinders kann kleiner als ein Durchmesser des Kreiszylinders sein. Die Höhe des Kreiszylinders kann ein Bruchteil des Durchmessers des Kreiszylinders betragen. Die Höhe des Kreiszylinders kann zwischen einem Zehntel und einem Drittel des Durchmessers, beispielsweise ein Fünftel des Durchmessers, betragen.

Gemäß einem weiteren Aspekt ist ein Kraftfahrzeug, insbesondere ein Nutzfahrzeug, bereitgestellt. Das Kraftfahrzeug umfasst ein Armaturenbrett, beispielsweise in einem Fahrerhaus des Nutzfahrzeugs. Im Armaturenbrett ist eine Bedienvorrichtung gemäß dem vorgenannten Aspekt angeordnet.

Weitere Merkmale und Vorteile der Erfindung werden im Folgenden unter Bezugnahme auf die beigefügten Zeichnungen beschrieben. Es zeigen:

Figur 1 eine schematische Bildschirmanzeige in einem ersten Zustand eines ersten Ausführungsbeispiels und eine Projektion zur Erzeugung der Bildschirmanzeige;

Figur 2 eine schematische Bildschirmanzeige in einem zweiten Zustand des ersten Ausführungsbeispiels und eine Projektion zur Erzeugung der Bildschirmanzeige;

Figur 3 eine schematische Bildschirmanzeige in einem zweiten Zustand einer Variante des ersten Ausführungsbeispiels und eine Projektion zur Erzeugung der Bildschirmanzeige;

Figur 4 eine schematische Bildschirmanzeige des ersten Zustands eines zweiten Ausführungsbeispiels;

Figur 5 schematisch eine Drehbewegung um eine horizontale Achse beim Übergang vom ersten Zustand in den zweiten Zustand;

Figur 6 eine schematische Bildschirmanzeige des zweiten Zustands des zweiten Ausführungsbeispiels;

Figur 7 eine schematische Bildschirmanzeige des ersten Zustands eines dritten Ausführungsbeispiels; und

Figur 8 eine schematische Bildschirmanzeige des zweiten Zustands des dritten Ausführungsbeispiels.

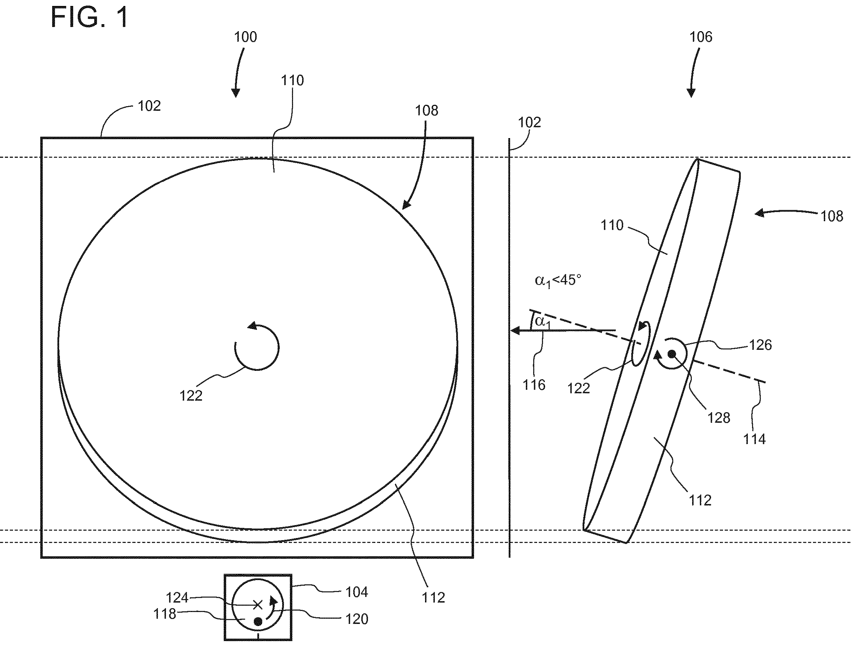

Figur 1 zeigt schematisch ein erstes Ausführungsbeispiel einer allgemein mit Bezugszeichen 100 bezeichneten Vorrichtung zur Bedienung eines Kraftfahrzeugs. Die Vorrichtung 100 umfasst einen Bildschirm 102 und eine Eingabeeinheit 104.

Der Bildschirm 100 ist dazu ausgebildet, eine Projektion eines Kreiszylinders 108 mit einer Stirnfläche 110 und einer Mantelfläche 112 anzuzeigen.

In einem in Figur 1 gezeigten ersten Zustand weicht eine Längsachse 114 des Kreiszylinders 108 von einer Richtung 116 der Projektion 106 um einen Winkel $\alpha_1$ ab, der kleiner als 45° ist.

Die Eingabeeinheit 104 umfasst beispielsweise einen Dreh-Drücksteller 118. Eine eingegebene Drehrichtung 120 kann eine stetige Drehbewegung 122 des Kreiszylinders um seine Längsachse bewirken.

Eine durch Drücken des Dreh-Drückstellers 118 eingegebene Auswahlbestätigung 124 kann einen Übergang vom ersten Zustand in einen zweiten Zustand bewirken. Der Übergang umfasst eine stetige Drehbewegung 126 des Kreiszylinders 108 um eine zur Projektionsrichtung 116 senkrechte Achse 128.

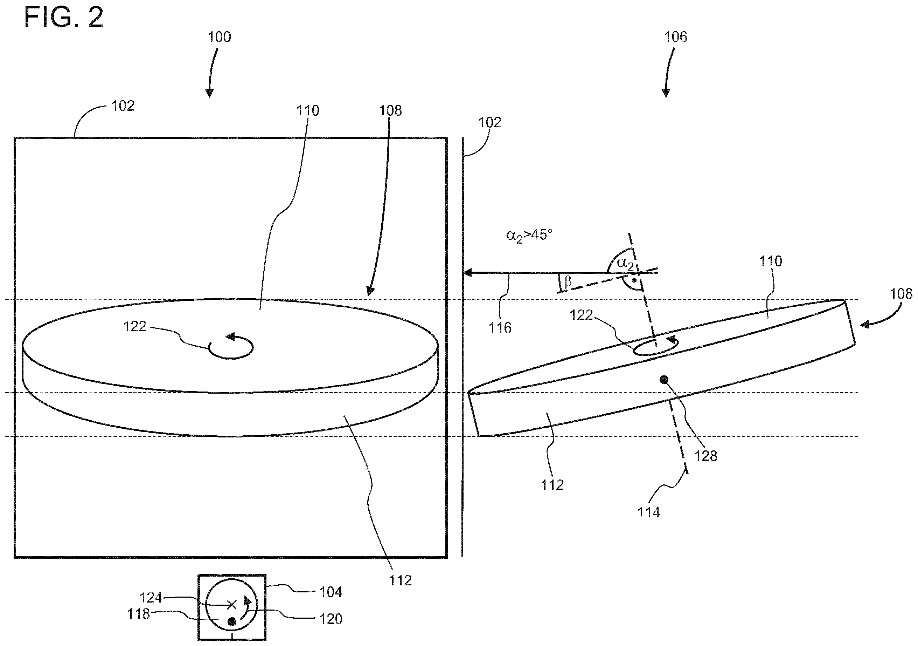

Figur 2 zeigt schematisch den zweiten Zustand, bei dem die Längsachse 114 des Kreiszylinders 108 von der Projektionsrichtung 116 um einen Winkel $\alpha_2$ abweicht, der größer als 45° ist. Die durch die Eingabe der Drehrichtung 120 bewirkte stetige Drehbewegung 122 des Kreiszylinders 108 um seine Längsachse 114 ist unabhängig vom ersten oder zweiten Zustand ermöglicht.

In einer Ausgestaltung sind der Winkel $\alpha_1$ des ersten Zustands und/oder ein zum Winkel $\alpha_2$ des zweiten Zustands 90°-komplementärer Winkel $\beta=90°-\alpha_2$ betragsmäßig kleiner als 30°.

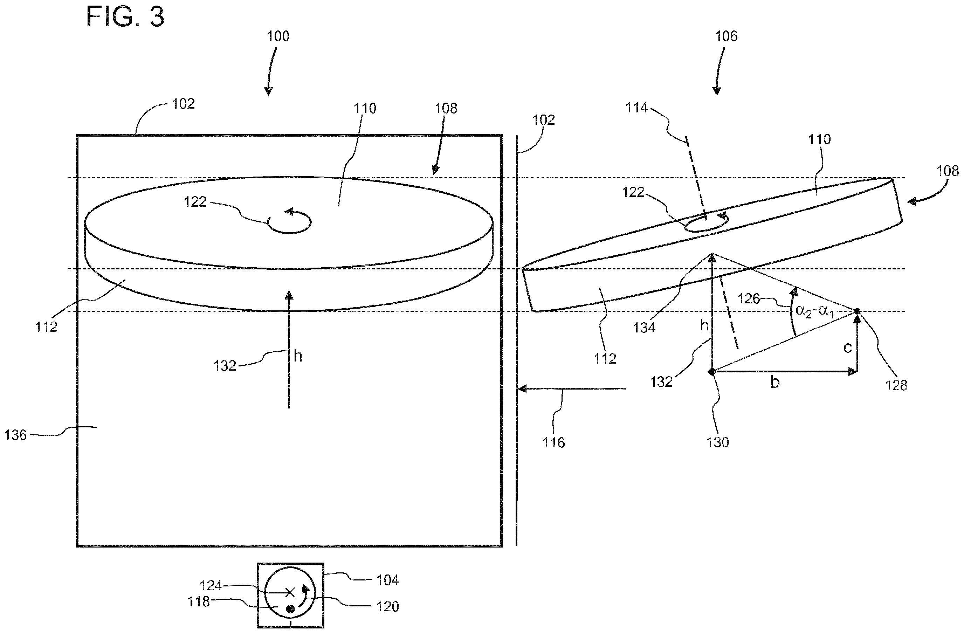

Figur 3 zeigt schematisch den zweiten Zustand in einer Variante des ersten Ausführungsbeispiels, bei dem die zur Projektionsrichtung 116 senkrechte Achse 128 gegenüber einem geometrischen Mittelpunkt des Kreiszylinders 108 beabstandet ist.

Beispielsweise ist die Achse 128 gegenüber einem Mittelpunkt 130 des Kreiszylinders 108 im ersten Zustand um einen Abstand b entgegen der Projektionsrichtung 116 versetzt. Alternativ oder ergänzend ist die Achse 128 in Richtung eines Versatzes 132, der senkrecht zur Projektionsrichtung 116 und senkrecht zur Achse 128 ist, um einen Abstand c versetzt. Beispielsweise ist der Abstand c gleich der halben Länge h des Versatzes 132. Insbesondere kann der Abstand b gemäß

$$ b = \frac{h}{2 \tan(\alpha_2 - \alpha_1)/2} $$

bestimmt sein, wodurch der Mittelpunkt 130 des Kreiszylinders 108 im ersten Zustand beim Übergang in den zweiten Zustand zum Mittelpunkt 134 des Kreiszylinders 108 in die Richtung des Versatzes 132 um die Länge h verschoben wird.

Dadurch entsteht ein zusätzlicher Bereich 136 am Bildschirm 102. In dem durch den Versatz 132 freigegebenen Bereich 136 können im zweiten Zustand, abhängig von einer Drehstellung des Kreiszylinders 108 um seine Längsachse 114, das Fahrzeug betreffende Daten angezeigt werden.

Im ersten Zustand ist eine Vielzahl an Auswahlpunkten umlaufend auf der Stirnfläche 110 angeordnet. Im zweiten Zustand ist eine Vielzahl an Unterauswahlpunkten auf der Mantelfläche 112 des Kreiszylinders 108 angeordnet. Durch die Drehbewegung 122 kann im ersten Zustand einer der Auswahlpunkte und im zweiten Zustand einer der Unterauswahlpunkte bestimmt werden.

Die Projektionsrichtung 116 ist vorzugsweise senkrecht zu einer Projektionsfläche. Die Projektionsfläche ist in den Figuren 1 bis 3, beispielsweise zum Zwecke einer numerischen Erzeugung der Anzeige der Projektion 106 auf dem Bildschirm 102, als mit dem Bildschirm 102 identisch dargestellt.

Im Fall einer Zentralprojektion ist die Projektionsrichtung 116 (beispielsweise geringfügig) ortsabhängig. Die Zentralprojektion vergrößert den im ersten Zustand bestimmten Auswahlpunkt bzw. den im zweiten Zustand bestimmten Unterauswahlpunkt.

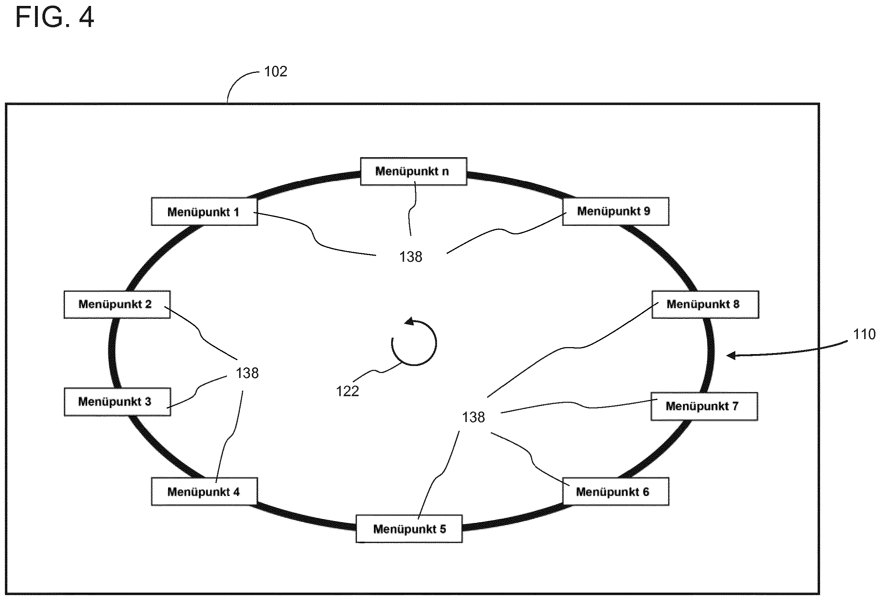

Figur 4 zeigt schematisch eine Anzeige eines Bildschirms 102 eines zweiten Ausführungsbeispiels im ersten Zustand. Der Winkel $\alpha_1$ kann in Abhängigkeit von einem Seitenverhältnis (beispielsweise Breite zu Höhe) des Bildschirms 102 für eine optimale Passform der Stirnfläche 110 im ersten Zustand bestimmt sein.

Die Auswahlpunkte 138 können Menüpunkte eines im ersten Zustand angezeigten Hauptmenüs der Bedienvorrichtung 100 sein. Die Auswahlpunkte 138 sind innerhalb der Stirnfläche 110 umlaufend und gleichmäßig beabstandet angeordnet. Abhängig von der Drehstellung ist der (beispielsweise in Figur 4 als "Menüpunkt 5" bezeichnete) auf dem Bildschirm 102 tiefste beziehungsweise im projizierten Raum vorderste Auswahlpunkt bestimmt. Durch die Auswahlbestätigung 124 wird der bestimmte Auswahlpunkt angewählt und/oder aktiviert.

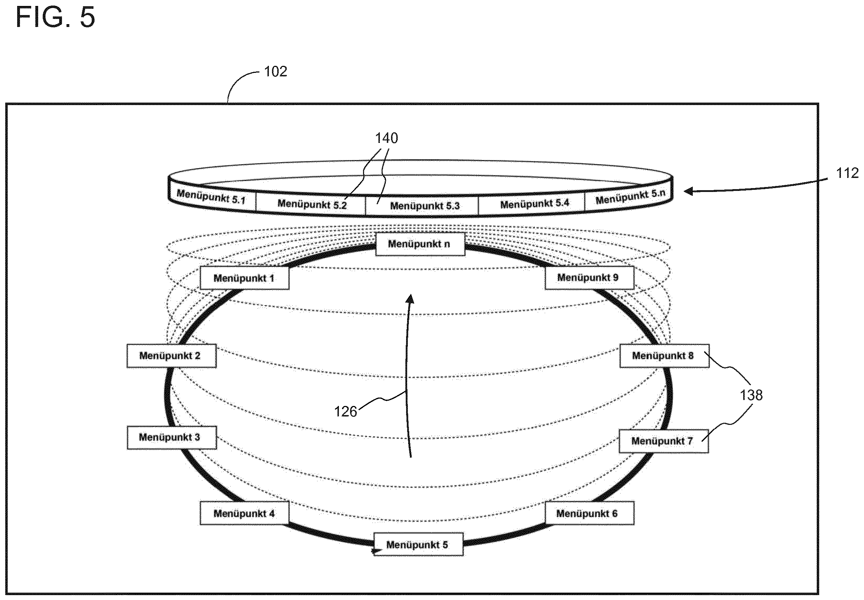

Figur 5 zeigt schematisch den durch die Drehbewegung 126 um die Achse 128 bewirkten fließenden Übergang vom ersten Zustand in den zweiten Zustand anhand des zweiten Ausführungsbeispiels. Die runde und zunehmend ovale Anordnung der Auswahlpunkte 138 wird bei Aktivierung eines Auswahlpunkts entsprechend der Projektion 106 in räumlicher Darstellungsweise auf dem Bildschirm 102 an dessen oberen Rand gezogen. Dabei flachen die Auswahlpunkte 138 durch die Drehbewegung 126 zunehmend ab und werden im zweiten Zustand nicht mehr angezeigt.

Am oberen Rand des Bildschirms 102 erscheinen aufgrund der Drehbewegung 126 des Kreiszylinders 108 die Unterauswahlpunkte 140 an der sich vergrößernden Mantelfläche 112. Die Unterauswahlpunkte 140 bilden ein Untermenü zu dem bei der Eingabe der Auswahlbestätigung 124 bestimmten Auswahlpunkt 138.

Eine Rückkehr in den ersten Zustand (beispielsweise das Hauptmenü) erfolgt, indem die Drehbewegung 126 nach der Aktivierung des entsprechenden Auswahlpunkts 138 in umgekehrter Richtung stetig durchlaufen wird. Die Rückkehr kann durch den Ablauf einer vorbestimmten Zeitspanne ohne Eingabe und/oder durch die Eingabe einer Rücksprunganweisung ausgelöst werden. Zur Eingabe der Rücksprunganweisung kann die Eingabeeinheit 104 eine separate Rücktaste oder eine separate Hauptmenütaste (auch: "Home"-Taste) umfassen.

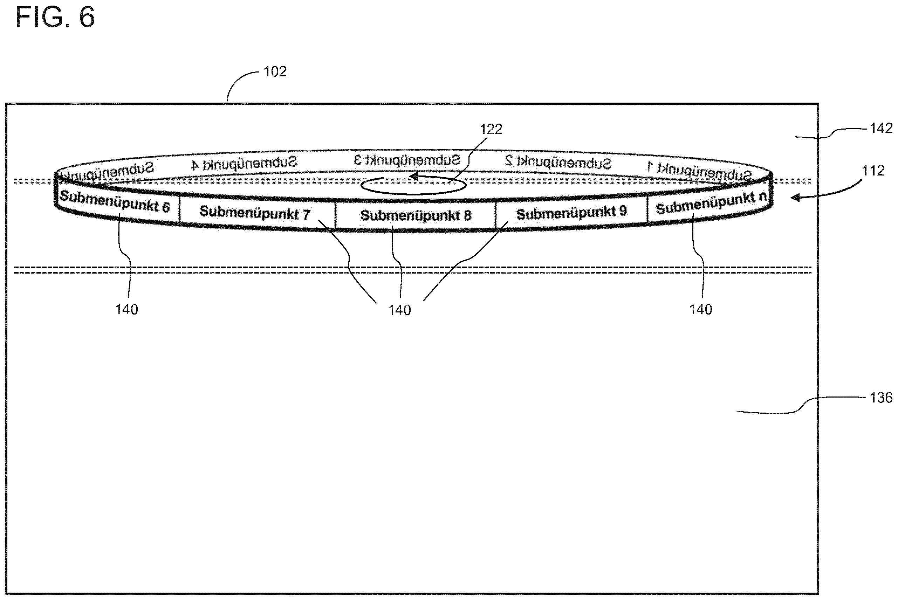

Durch die Drehbewegung 122 des Kreiszylinders 108 um seine Längsachse 114 kann in dem in Figur 6 dargestellten zweiten Zustand einer der Unterauswahlpunkte 140 bestimmt werden. Je nach Anzahl der Unterauswahlpunkte 140 sind in einer ersten Implementierung alle Unterauswahlpunkte 140 in jeder Drehstellung auf dem Bildschirm 102 sichtbar.

In einer zweiten Implementierung (beispielsweise für eine größere Anzahl an Unterauswahlpunkten 140 als in der ersten Implementierung) sind in einem oberen Abschnitt 142 die Unterauswahlpunkte 140 entsprechend der Projektion 106 am Bildschirm 102 nicht sichtbar in den Hintergrund gedreht. Alternativ oder zusätzlich ist der gesamte im oberen Abschnitt 142 liegende Teil der Stirnfläche 110 und/oder der Mantelfläche 112 ausgeblendet.

Die Drehbewegung 122 des Kreiszylinders 108 um seine Längsachse 140, zur Bestimmung des Unterauswahlpunkts 140 im zweiten Zustand, kann beiden Drehrichtungen 120 folgen. In einer ersten Variante ist die Drehbewegung 122 und die damit verbundene Bewegung der Unterauswahlpunkte 140 endlos rollierend. In einer zweiten Variante ist die Drehbewegung 122 mit einem Anfangs- und einem Endpunkt versehen, an dem die Drehbewegung 122 in einer der Drehrichtungen 120 endet.

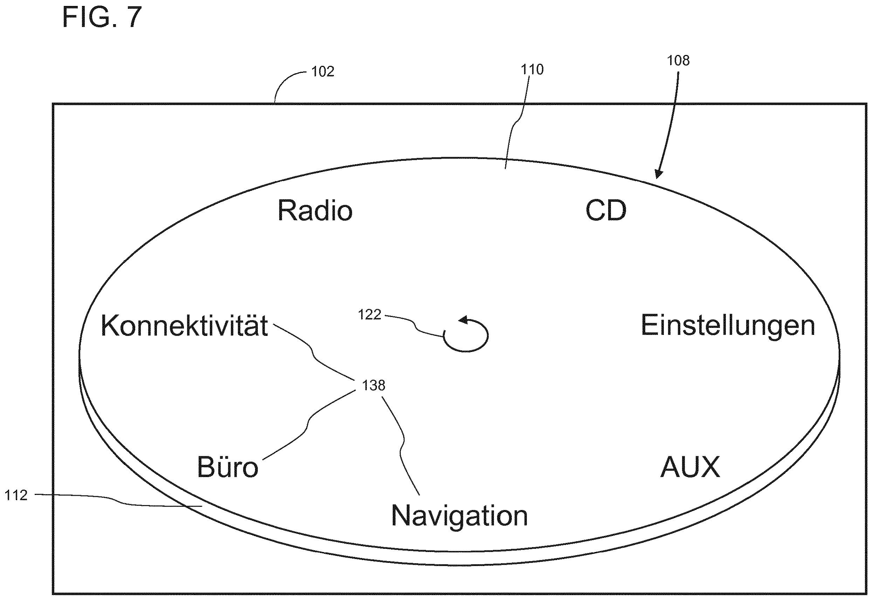

Figur 7 zeigt schematisch den Bildschirm 102 im ersten Zustand eines dritten Ausführungsbeispiels. Jeder Auswahlpunkt 138 auf der Stirnfläche 110 kann ein Symbol oder, wie in Figur 7 gezeigt, einen Schriftzug umfassen. Die in Figur 7 gezeigten Auswahlpunkte 138 bilden beispielsweise das Hauptmenü eines Infotainment-Systems für einen Lastkraftwagen.

Während im ersten Zustand die Mantelfläche 112 zur Darstellung des projizierten Kreiszylinders 108 vollständig angezeigt ist, sind die im ersten Zustand undefinierten Unterauswahlpunkte nicht angezeigt.

Die Bedienung erfolgt, z. B. mittels des Dreh-Drücksteller 118, der hinsichtlich Form und Drehrichtung 120 der Form und Drehbewegung 122 des Kreiszylinders 108 entspricht. Jedes genannte Ausführungsbeispiel kann dahingehend modifiziert sein, dass andere Bedienformen implementiert sind, wie z. B. die Bedienung mit einem berührungsempfindlichen Bildschirm 102 (auch: Touchscreen), mit einer vom Bildschirm 102 räumlich getrennten berührungsempfindlichen Eingabefläche (auch: Touchpad) oder mit einer Gestensteuerung.

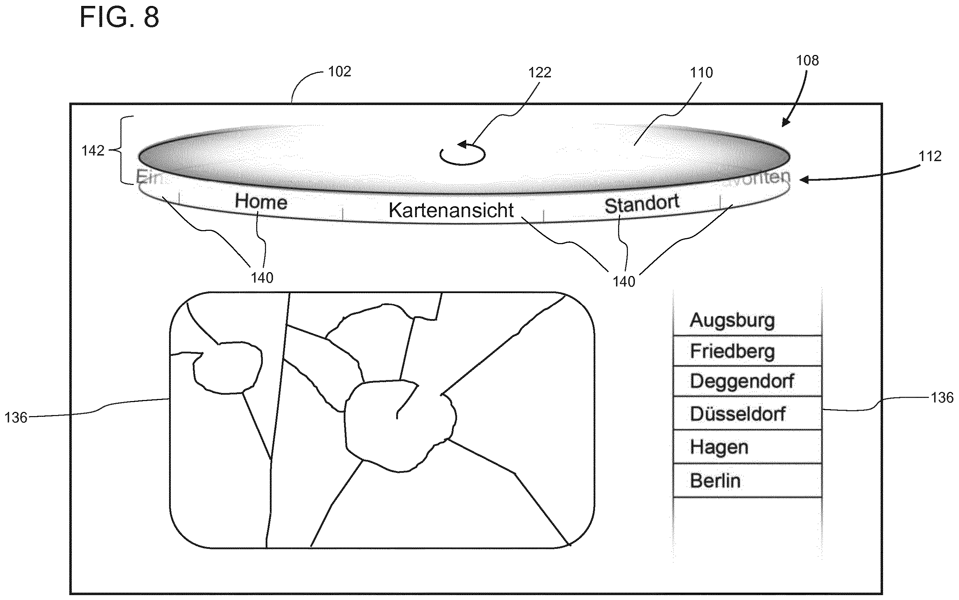

Figur 8 zeigt schematisch den Bildschirm 102 im zweiten Zustand des dritten Ausführungsbeispiels. Jeder Unterauswahlpunkt 140 auf der Mantelfläche 111 kann ein Symbol oder, wie in Figur 8 gezeigt, einen Schriftzug umfassen. Derselbe Eingabemechanismus wie im ersten Zustand steuert die Drehbewegung 122 im zweiten Zustand.

Durch die Drehbewegung 126 beim Übergang vom ersten Zustand in den zweiten Zustand ist die Höhe des projizierten Kreiszylinders 108 auf einen Bruchteil der Höhe des Bildschirms 102 reduziert. Durch die exzentrische Lage der zugehörigen Drehachse 128 ist der projizierte Kreiszylinder 108 am oberen Bildrand des Bildschirms 102 angeordnet. In den durch die Drehbewegung 126 freigegeben Bereichen 136 des Bildschirm 102 werden Daten angezeigt, die für den bestimmten Unterauswahlpunkt spezifisch sind, beispielsweise eine Städteliste und eine Umgebungskarte für den in Figur 8 bestimmten Unterauswahlpunkt "Kartenansicht" des Auswahlpunkts "Navigation".

Wie anhand vorstehend beschriebener Ausführungsbeispiele verdeutlicht, definiert die Projektion eines Kreiszylinders persistente Flächen, an denen Auswahlpunkte und Unterauswahlpunkte zur Fahrzeugbedienung angeordnet werden können. Bildschirmanzeige und Bedienungseingabe sind in allen Zuständen einheitlich und konsistent korreliert.

Das Verhältnis von Höhe und Durchmesser des Kreiszylinders kann dem einer Münze entsprechen. In einer Ausgangsposition, beispielsweise für ein Hauptmenü der Fahrzeugbedienung, wird in einem ersten Zustand eine Aufsicht des Kreiszylinders angezeigt. Beim Anklicken eines Auswahlpunkts klappt die Projektion des Kreiszylinders auf dem Bildschirm nach oben, wodurch dessen Mantelfläche als Rand sichtbar wird.

Auf diesem grafischen Rand sind Unterauswahlpunkte angeordnet, beispielsweise für ein Untermenü des jeweiligen Hauptmenüpunkts. Diese Bildschirmanzeige kann in Form und Bewegung einen direkten Bezug zum Bedienelement aufweisen, das vorzugsweise der Form des Kreiszylinders entspricht (z. B. in Ringform).

Die fließende Bewegung des projizierten Kreiszylinders kann dem Benutzer (beispielsweise dem Fahrer) eine gewohnte dreidimensionale Umgebung vermitteln. Dadurch wird ein Verschwinden der Auswahlpunkte im zweiten Zustand nachvollziehbar und der Benutzer behält den Navigationsweg der Bedienung mühelos in Erinnerung. Durch die in unterschiedlichen Perspektiven angezeigte Projektion des Kreiszylinders wird eine Objektpermanenz erreicht, durch die der Benutzer problemlos in die Ausgangsposition (beispielsweise zum Hauptmenü) zurücknavigiert.

Die Bedienungsführung ermöglicht eine platzsparende Nutzung des Bildschirms. Insbesondere korreliert eine Kontraktion der Projektion des Kreiszylinders zum Bildschirmrand mit der nutzbringenden Anzeige auswahlspezifischer Inhalte (beispielsweise Fahrzeugdaten oder durch die externe Konnektivität erhaltene Informationen).

Durch eine teilweise im Hintergrund liegende Darstellung des Untermenüs kann eine besonders platzsparende Darstellungsform der Untermenüpunkte erreicht werden, die konsistent zur Bedienung ist.

Obwohl die Erfindung in Bezug auf exemplarische Ausführungsbeispiele beschrieben worden ist, ist es für einen Fachmann ersichtlich, dass verschiedene Änderungen vorgenommen werden können und Äquivalente als Ersatz verwendet werden können. Ferner können viele Modifikationen vorgenommen werden, um eine bestimmte Situation oder ein bestimmtes Material an die Lehre der Erfindung anzupassen. Folglich ist die Erfindung nicht auf die offenbarten Ausführungsbeispiele beschränkt, sondern umfasst alle Ausführungsbeispiele, die in den Bereich der beigefügten Patentansprüche fallen.

**Bezugszeichenliste**

| | |
|---|---|
| 100 | Vorrichtung zur Bedienung eines Kraftfahrzeugs |
| 102 | Bildschirm |
| 104 | Eingabeeinheit |
| 106 | Projektion |
| 108 | Kreiszylinder |
| 110 | Stirnfläche des Kreiszylinders |
| 112 | Mantelfläche des Kreiszylinders |
| 114 | Längsachse des Kreiszylinders |
| 116 | Projektionsrichtung |
| 118 | Dreh-Drücksteller |
| 120 | Eingegebene Drehrichtung |
| 122 | Drehbewegung um Längsachse des Kreiszylinders |
| 124 | Eingegebene Auswahlbestätigung |
| 126 | Drehbewegung bei Übergang von erstem zu zweitem Zustand |
| 128 | Achse senkrecht zur Projektionsrichtung |
| 130 | Mittelpunkt des Kreiszylinders im ersten Zustand |
| 132 | Versatz |
| 134 | Mittelpunkt des Kreiszylinders im zweiten Zustand |
| 136 | Freigegebener Bereich |
| 138 | Auswahlpunkt |
| 140 | Unterauswahlpunkt |
| 142 | Oberer Abschnitt des Bildschirms |

**Patentansprüche**

1. Vorrichtung (100) zur Bedienung eines Kraftfahrzeugs, umfassend:

   einen Bildschirm (102) zur Anzeige einer Projektion (106) eines Kreiszylinders (108) mit einer Stirnfläche (110) und einer Mantelfläche (112), wobei in einem ersten Zustand eine Längsachse (114) des Kreiszylinders um weniger als 45° von einer Richtung (116) der Projektion abweicht, und in einem zweiten Zustand die Längsachse (114) des Kreiszylinders um mehr als 45° von der Richtung (116) der Projektion abweicht; und eine Eingabeeinheit (104) zur Eingabe einer Drehrichtung (120) und einer Auswahlbestätigung (124), wobei die Eingabe der Drehrichtung (120) eine stetige Drehbewegung (122) des Kreiszylinders (108) um seine Längsachse (114) bewirkt, und die Eingabe der Auswahlbestätigung (124) im ersten Zustand eine stetige Drehbewegung (126) des Kreiszylinders (108) um eine zur Projektionsrichtung (116) senkrechte Achse (128) in den zweiten Zustand bewirkt, und wobei im ersten Zustand eine Vielzahl an Auswahlpunkten (138) auf der Stirnfläche (110) angeordnet ist, und im zweiten Zustand eine Vielzahl an Unterauswahlpunkten (140) auf der Mantelfläche (112) angeordnet ist, wobei eine Drehstellung des Kreiszylinders (108) um die Längsachse (114) im ersten Zustand einen der Auswahlpunkte (138) bestimmt, und wobei eine Drehstellung des Kreiszylinders (108) um die Längsachse (114) im zweiten Zustand einen der Unterauswahlpunkte (140) bestimmt, und wobei im ersten Zustand die Mitte (132) des Kreiszylinders (108) in die Mitte des Bildschirms (102) projiziert wird, und im zweiten Zustand die Mitte (134) des Kreiszylinders (108) in die oberen Hälfte des Bildschirms (102) projiziert wird, und wobei die Vorrichtung (100) dazu ausgebildet ist, in einem durch die Drehbewegung (126) vom ersten Zustand in den zweiten Zustand freigegebenen Bereich (136) des Bildschirms (102) Daten anzuzeigen.

2. Bedienvorrichtung nach Anspruch 1, wobei die im zweiten Zustand auf der Mantelfläche (112) angeordneten Unterauswahlpunkte (140) abhängig sind vom bei der Eingabe der Auswahlbestätigung (124) durch die Drehstellung im ersten Zustand bestimmten Auswahlpunkt (138).

3. Bedienvorrichtung nach Anspruch 1 oder 2, wobei im ersten Zustand die Unterauswahlpunkte (140) ausgeblendet oder unkenntlich sind.

4. Bedienvorrichtung nach einem der Ansprüche 1 bis 3, wobei die Eingabeeinheit (104) dazu ausgebildet ist, im zweiten Zustand in Reaktion auf die Eingabe einer Rücksprunganweisung und/oder in Reaktion auf ein Funktionsende des bestimmten Unterauswahlpunkts (140), eine stetige Drehbewegung des Kreiszylinders (108) um die zur Projektionsrichtung (116) senkrechte Achse (128) in den ersten Zustand zu bewirken.

5. Bedienvorrichtung nach einem der Ansprüche 1 bis 4, wobei im zweiten Zustand die Auswahlpunkte (138) ausgeblendet oder unkenntlich sind.

**6.** Bedienvorrichtung nach einem der Ansprüche 1 bis 5, wobei die zur Projektionsrichtung (116) senkrechte Achse (128) versetzt zur Mitte (132; 134) des Kreiszylinders (106) ist.

**7.** Bedienvorrichtung nach einem der Ansprüche 1 bis 6, wobei die Daten vom bestimmten Unterauswahlpunkt (140) abhängen.

**8.** Bedienvorrichtung nach einem der Ansprüche 1 bis 7, wobei die Eingabeeinheit (104) einen Drehknopf (118) umfasst und dazu ausgebildet ist, eine Drehstellung und/oder eine Drehbewegung des Drehknopfs (118) zu erfassen, und wobei die Drehstellung und/oder die Drehbewegung des Drehknopfs (118) der Drehstellung beziehungsweise der Drehbewegung (122) des Kreiszylinders (108) um seine Längsachse (114) entspricht.

**9.** Bedienvorrichtung nach Anspruch 8, wobei die Eingabe der Auswahlbestätigung (124) ein Drücken des Drehknopfs (118) längs seiner Drehachse umfasst.

**10.** Bedienvorrichtung nach einem der Ansprüche 1 bis 9, wobei der Bildschirm (102) und/oder die Eingabeeinheit (104) an einem Kombinationsinstrument des Kraftfahrzeugs angeordnet ist.

**11.** Kraftfahrzeug, insbesondere Nutzfahrzeug, dessen Armaturenbrett eine Vorrichtung (100) nach einem der Ansprüche 1 bis 10 umfasst.

**Claims**

**1.** A device (100) for operating a motor vehicle, comprising
a screen (102) for displaying a projection (106) of a circular cylinder (108) with an end face (110) and a lateral face (112), wherein in a first state a longitudinal axis (114) of the circular cylinder deviates by less than 45° from a direction (116) of the projection, and in a second state the longitudinal axis (114) of the circular cylinder deviates by more than 45° from the direction (116) of the projection; and
an input unit (104) for inputting a rotational direction (120) and a selection confirmation (124), wherein the inputting of the rotational direction (120) brings about a continuous rotational movement (122) of the circular cylinder (108) about its longitudinal axis (114), and the inputting of the selection confirmation (124) in the first state brings about a continuous rotational movement (126) of the circular cylinder (108) into the second state about an axis (128) which is perpendicular to the direction (116) of the projection, and wherein in the first state a multiplicity of selection points (138) is arranged on the end face (110), and in the second state a multiplicity of sub-selection points (140) is arranged on the lateral face (112), wherein a rotational position of the circular cylinder (108) about the longitudinal axis (114) in the first state determines one of the selection points (138), and wherein a rotational position of the circular cylinder (108) about the longitudinal axis (114) in the second state determines one of the sub-selection points (140), and wherein in the first state the centre (132) of the circular cylinder (108) is projected into the centre of the screen (102), and in the second state the centre (134) of the circular cylinder (108) is projected into the upper half of the screen (102), and wherein the device (100) is designed to display data in a region (136) of the screen (102) which is cleared as a result of the rotational movement (126) from the first state into the second state.

**2.** The operator control device according to Claim 1, wherein the sub-selection points (140) arranged on the lateral face (112) in the second state are dependent on the selection point (138) which is determined by the rotary position in the first state when the selection confirmation (124) is input.

**3.** The operator control device according to Claim 1 or 2, wherein in the first state the sub-selection points (140) are faded out or imperceptible.

**4.** The operator control device according to one of Claims 1 to 3, wherein the input device (104) is designed to bring about in the second state, in reaction to the inputting of a return instruction and/or in reaction to a function end of the determined sub-selection point (140), a continuous rotational movement of the circular cylinder (108) about the axis (128), which is perpendicular to the direction of the projection (116), into the first state.

**5.** The operator control device according to one of Claims 1 to 4, wherein in the second state the selection points (138) are faded out or imperceptible.

**6.** The operator control device according to one of Claims 1 to 5, wherein the axis (128) which is perpendicular to the direction of the projection (116) is offset with respect to the centre (132; 134) of the circular cylinder (106).

**7.** The operator control device according to one of Claims 1 to 6, wherein the data depend on the determined sub-selection point (140).

**8.** The operator control device according to one of Claims 1 to 7, wherein the input device (104) comprises a rotary knob (118) and is designed to sense a rotational position and/or a rotational movement of the rotary knob (118), and wherein the rotational position and/or the rotational movement of the rotary knob (118) corresponds to the rotational position or the rotational movement (122) of the circular cylinder (108) about its longitudinal axis (114).

9. The operator control device according to Claim 8, wherein the inputting of the selection confirmation (124) comprises pressing the rotary knob (118) along its rotational axis.

10. The operator control device according to one of Claims 1 to 9, wherein the screen (102) and/or the input unit (104) is arranged on a combination instrument of the motor vehicle.

11. A motor vehicle, in particular utility model, whose dashboard comprises a device (100) according to one of Claims 1 to 10.


**Revendications**

1. Dispositif (100) pour commander un véhicule automobile, comprenant :

   un écran (102) pour indiquer une projection (106) d'un cylindre circulaire (108) avec une surface frontale (110) et une surface d'enveloppe (112), dans lequel, dans un premier état, un axe longitudinal (114) du cylindre circulaire s'écarte de moins de 45° d'une direction (116) de la projection, et dans un deuxième état, l'axe longitudinal (114) du cylindre circulaire s'écarte de plus de 45° de la direction (116) de la projection ; et une unité d'entrée (104) pour entrer un sens de rotation (120) et une confirmation de sélection (124), l'entrée du sens de rotation (120) provoquant un mouvement de rotation continu (122) du cylindre circulaire (108) autour de son axe longitudinal (114), et l'entrée de la confirmation de sélection (124) dans le premier état provoquant un mouvement de rotation continu (126) du cylindre circulaire (108) autour d'un axe (128) perpendiculaire à la direction de projection (116) dans le deuxième état, et dans le premier état, une pluralité de points de sélection (138) étant disposés sur la surface frontale (110), et dans le deuxième état, une pluralité de points de sous-sélection (140) étant disposés sur la surface d'enveloppe (112), une position de rotation du cylindre circulaire (108) autour de l'axe longitudinal (114) dans le premier état déterminant l'un des points de sélection (138), et une position de rotation du cylindre circulaire (108) autour de l'axe longitudinal (114) dans le deuxième état déterminant l'un des points de sous-sélection (140), et dans le premier état, le centre (132) du cylindre circulaire (108) étant projeté au centre de l'écran (102), et dans le deuxième état, le centre (134) du cylindre circulaire (108) étant projeté dans la moitié supérieure de l'écran (102), et le dispositif (100) étant réalisé pour indiquer des données dans une région (136) de l'écran (102) dégagée par le mouvement de rotation (126) du premier état dans le deuxième état.

2. Dispositif de commande selon la revendication 1, dans lequel les points de sous-sélection (140) disposés dans le deuxième état sur la surface d'enveloppe (112) dépendent du point de sélection (138) déterminé lors de l'entrée de la confirmation de sélection (124) par la position de rotation dans le premier état.

3. Dispositif de commande selon la revendication 1 ou 2, dans lequel, dans le premier état, les points de sous-sélection (140) sont masqués ou indécelables.

4. Dispositif de commande selon l'une quelconque des revendications 1 à 3, dans lequel l'unité d'entrée (104) est réalisée, dans le deuxième état, en réaction à l'entrée d'une instruction de retour et/ou en réaction à une fin de fonction du point de sous-sélection déterminé (140), pour provoquer un mouvement de rotation continu du cylindre circulaire (108) autour de l'axe (128) perpendiculaire à la direction de projection (116) dans le premier état.

5. Dispositif de commande selon l'une quelconque des revendications 1 à 4, dans lequel, dans le deuxième état, les points de sélection (138) sont masqués ou indécelables.

6. Dispositif de commande selon l'une quelconque des revendications 1 à 5, dans lequel l'axe (128) perpendiculaire à la direction de projection (116) est décalé par rapport au centre (132 ; 134) du cylindre circulaire (106).

7. Dispositif de commande selon l'une quelconque des revendications 1 à 6, dans lequel les données dépendent du point de sous-sélection déterminé (140) .

8. Dispositif de commande selon l'une quelconque des revendications 1 à 7, dans lequel l'unité d'entrée (104) comprend un bouton tournant (118) et est réalisée pour détecter une position de rotation et/ou un mouvement de rotation du bouton tournant (118), et la position de rotation et/ou le mouvement de rotation du bouton tournant (118) correspondant à la position de rotation ou au mouvement de rotation (122) du cylindre circulaire (108) autour de son axe longitudinal (114).

9. Dispositif de commande selon la revendication 8, dans lequel l'entrée de la confirmation de sélection (124) comprend un enfoncement du bouton tournant (118) le long de son axe de rotation.

10. Dispositif de commande selon l'une quelconque des revendications 1 à 9, dans lequel l'écran (102) et/ou l'unité de saisie (104) sont disposés sur un instrument combiné du véhicule automobile.

11. Véhicule automobile, en particulier véhicule utilitaire, dont le tableau de bord comprend un dispositif (100) selon l'une quelconque des revendications 1 à 10.

FIG. 1

EP 3 264 247 B1

FIG. 2

$\alpha_2 > 45°$

EP 3 264 247 B1

12

FIG. 3

# FIG. 4

EP 3 264 247 B1

FIG. 5

# FIG. 6

EP 3 264 247 B1

FIG. 7

FIG. 8

EP 3 264 247 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20100333030 A1
- EP 1710673 A2
- DE 102007039442 A1
- US 20160154564 A1
- US 20080022228 A1